# EUROPEAN PATENT APPLICATION

(11) **EP 3 279 496 A1**
(43) Date of publication of application: **07.02.2018**
(21) Application number: 16182195.4
(22) Date of filing: 01.08.2016
(51) Int. Cl.: F16F 9/34, F16F 9/46

(54) **FLOW ADJUSTMENT AND OIL PATH SEPARATION STRUCTURE OF SHOCK ABSORBER**

(71) Applicant: Kind Shock Hi-Tech Co., Ltd., Tainan City 709 (TW)
(72) Inventor: HSU, Jung Yu, TAINAN CITY 709 (TW)
(74) Representative: Cabinet Chaillot

(57) **Abstract**

A flow adjustment and oil path separation structure of a shock absorber (81, 91) includes inner and outer tubes (11, 12) sheathed and linearly contracted and extended with respect to each other and having a base tube module (20) installed in the inner tube (11) and including a first component (21) and a second component (22) sheathed on each other. A primary oil chamber (23) is formed in the first component (21). A secondary oil chamber (24) is formed between the first and second components (21, 22). An oil path separation module (30) includes an oil path separator seat (31) with an ON/OFF installing slot (32), a primary channel (33), a secondary channel group (34), a first adjusting hole (41) and a communication channel (50). A first adjustment module (42) is installed at the first adjusting hole (41) for adjusting the amount of hydraulic oil in the first adjusting hole (41). An ON/OFF switch module (60) is installed in the ON/OFF installing slot (32) for switching a flow ON/OFF status of the secondary channel group (34).

## Description

### FIELD OF THE INVENTION

The present invention relates to a flow adjustment structure of a hydraulic shock absorber, and more particularly to the flow adjustment structure that uses an oil path separator seat for the oil path diversion of each oil chamber and combines with a structure having an adjustment module to adjust a damping ratio during shock absorption.

### BACKGROUND OF THE INVENTION

In general, a shock absorber is primarily provided for receiving and stopping an impact force exerted on a mechanism to provide a buffering function for offsetting the force, and the shock absorber is used extensively in different areas such as machine, equipments, transportation means, furniture, molds or tools, and particularly in the transportation means. The impact force produced from road conditions and transmitted to wheels and a vehicle body of the transportation means is absorbed by the shock absorber or a suspension device to provide a comfortable ride of passengers.

In bicycles, the shock absorber is usually installed at a front fork, a seat post or a rear fork, and primarily provided for buffering the impact force coming from the ground and transmitted to the front wheel and the front fork. The shock absorber installed in the seat post is provided for buffering the impact force transmitted from a main bike frame to the seat post, and the absorber installed between the rear fork and the main bike frame is provided for buffering the impact force transmitted from the ground to the rear wheel.

The front fork shock absorber of a bicycle is mainly divided into a "mechanical", "hydraulic", or "oil and gas hybrid" shock absorber, wherein the mechanical front fork shock absorber refers to a component capable of producing a damping force in its structure and using an elastic member to buffer the impact force. One of such front fork shock absorber known to applicant comes with an oil chamber in the front fork and filled with a hydraulic oil that flows appropriately in the structure to provide the buffering effect based on the hydraulic principle. Another pneumatic front fork shock absorber comes with an oil chamber and an air chamber designed in the structure, and the property of a gas being compressible is used for buffering the impact force. Other shock absorbers such as "hydraulic and pneumatic" and "mechanical and hydraulic" shock absorbers are applied in a "hybrid" front fork shock absorber structure.

The hydraulic bicycle front fork shock absorber is not just designed to provide the basic buffering effect only, but it is also developed into a shock absorber with lockable and unlockable damping since a rider needs more effort to overcome the shock and no longer needs the function in a plan road condition, so that users may enable the shock absorbing function according to requirements. Some manufacturers further install an adjusting device in the bicycle front fork shock absorber, so that users may adjust the damping ratio to produce different levels of shock absorption. Such front fork shock absorber with a damping adjusting effect known to applicant comprises an inner tube which may be passed and installed into an end of an outer tube, and a piston having a sliding hole is installed at the inner tube that is installed at an end of the outer tube. A hollow tube with an end is fixed to the interior of the outer tube, and a through hole with a different hole diameter is formed inside the other end. A lower oil hole is formed radially on a wall of an end with a large hole diameter and communicates with the through hole. The end further has an adjusting valve disposed in the inner tube. An ejecting rod is passed through the adjusting valve and combined with the hollow tube, and an oil hole is formed in and penetrated through the ejecting rod. A control rod is installed in the hollow tube and has upper and lower cones formed at both ends of the control rod respectively. A circular portion is formed at the middle section of the control rod and disposed in a hole having a larger hole diameter and formed on the hollow rod. The upper cone has an elastic member installed to an outer side of the upper cone and disposed on an end surface of the circular portion and the ejecting rod. An adjusting member is installed onto the outer tube and disposed opposite to the lower cone. The adjusting member has a knob and an actuating member coupled to the knob. An end surface of the actuating member is formed into a conical top pushing surface. The top pushing surface and the lower cone are contacted and abutted against each other.

Another front fork shock absorber capable of adjusting the damping ratio known to application comprises an inner tube and an outer tube. A hollow piston is installed at an end of the inner tube. An adjusting tube is installed in the outer tube and the other end of the adjusting tube penetrates through the piston. The adjusting tube includes a hollow tube and a control rod is disposed inside the hollow tube. The hollow tube sequentially includes a spring, a washer, an adjusting valve with a side hole formed along the axial direction and disposed at an end of the inner tube and the adjusting valve. The inner tube has an upper and lower oil chambers formed therein. An ejecting rod is installed inside the oil hole and penetrates through each component and is fixed to a top end of the hollow tube. The washer is disposed at a side hole formed at an end opposite to the piston, and the hollow tube has an oil hole formed inside the lower oil chamber and communicates with the lower oil hole. The other end of the hollow tube penetrates through the outer tube and is fixed to the outer tube. A control rod is installed in the hollow tube, and has a cone formed at an end opposite to the lower oil hole. A gap is formed between the two.

In the aforementioned two structures, both have a shock absorber capable of adjusting damping and an adjusting knob installed under a front fork. The former primarily turns and drives the control rod by the top pushing surface in order to control the size of the oil hole and to achieve the effects of changing the flow rate of the hydraulic oil flow rate and to adjust the buffering level. The latter turns the lower knob to drive the control rod to produce a linear displacement and change the size of the oil hole, so as to achieve the effect of adjusting the buffer damping. However, such damping adjustment is applicable for a shock absorber in the buffering status only. If the shock absorber is switched to a shock absorbing and buffering status, the uder's pedaling force is consumed by the shock absorber although the impact force coming from the ground can be absorbed, so that the rider has to ride with more effort. If the damping ratio of the shock absorber is adjusted to a smaller ratio in order to reduce the force consuming, the buffering effect will be lower. If the damping ratio is adjusted to a larger ratio to increase the force consuming, the buffering effect will be higher. Therefore, the damping ratio may be adjusted by the rider according to requirements, road conditions, and personal preference.

However, the aforementioned conventional shock absorber capable of adjusting damping includes a component provided for a rider to turn and adjust the damping ratio, and such component is installed at a position under the front fork and proximate to the center position of the wheels, so that when the rider needs to make an adjustment of the damping ratio, the rider has to get off from the bike frame, park the bike and squat down before making the adjustment, and then stand up and get into the bike frame. Obviously, the adjustment requiring the foregoing steps is very inconvenient. In addition, the conventional structure comes with a simple and direct hydraulic oil flow path, so that if the impact force is large, then the flow of the hydraulic oil will encounter less resistance and will produce a greater flow rate and a larger force on the related components The components may be collided with each other or damaged easily to result in a shorter service life. On the other hand, the direct oil path produces a greater flow rate, so that the motions such as absorbing force, compressing, and rebounding will be quicker, and the rider may lose balance when the rider fails to respond immediately. Therefore, the inventor of the present invention provides a shock absorber capable of adjusting the damping ratio to achieve the effects of reducing the chance of damaging the components, improving the safety of the ride, and solving the problem of inconveniently making adjustments.

### SUMMARY OF THE INVENTION

In view of the aforementioned problems, the present invention provides a flow adjustment and oil path separation structure of a shock absorber, and the structure comprises a shock absorption tube having an inner tube and an outer tube in form of a telescope sheathed and linearly contracted and extendable with respect to each other; a base tube module installed in the inner tube and including a first component and a second component sheathed on each other, a primary oil chamber formed in the first component, and a secondary oil chamber formed between the first and second components; an oil path separation module, including an oil path separator seat with an ON/OFF installing slot concavely formed at a predetermined position and communicated with the secondary oil chamber, and the oil path separator seat having a primary channel communicated with the primary oil chamber and a secondary channel group communicated with the secondary oil chamber, and an end of the secondary channel being communicated with the primary channel; an adjustment module, having a first adjusting hole, and an end communicated with the secondary channel group, and a communication channel being used for communicating with the ON/OFF installing slot and the secondary channel group, and a first adjustment module, being installed in the first adjusting hole, for adjusting the amount of a hydraulic oil in the first adjusting hole; an ON/OFF switch module, installed in the ON/OFF installing slot and provided for switching the flow ON/OFF status of the secondary channel group. When the ON/OFF switch module is switched to an ON status, the primary channel and secondary channel group are situated in a shock absorbing status. When an impact pressure is encountered, the hydraulic oil flows from the primary oil chamber through the primary channel and sequentially passes through the secondary channel group, the communication channel, and the ON/OFF installing module before flowing to the secondary oil chamber to define a shock absorbing and buffering status. With the aforementioned components, the oil path separator seat is used to provide a bypass flow structure between the primary oil chamber and the secondary oil chamber. The invention further integrates the design of an adjustment module to provide a higher setting of the damping ratio and increase the range of the damping ratio, and also achieves the effects of lowering the chance of colliding and damaging related components when an impact force is encountered, extending the service life of components, reducing the compression and rebounce in shock absorption, improving the safety of riding, and provides a convenient way for the rider to rotate the knob and make adjustment by designing the knob at the top of the front fork. Obviously, the present invention is very convenient and practical.

The present invention also provides an oil path separation structure of a shock absorber, comprising: an oil path separator seat being substantially in the shape of a seat; an ON/OFF installing slot being a groove formed at a predetermined position of the oil path separator seat for providing a position for installing an ON/OFF switch module; a primary channel disposed at a predetermined position in the oil path separator seat, and communicating with a primary oil chamber; a secondary channel group disposed at a predetermined position of the oil path separator seat, and having a first secondary channel and a second secondary channel, the first secondary channel having an end communicating with the primary channel and the other end communicating with a secondary oil chamber, the second secondary channel having an end communicating with the ON/OFF installing slot and the other end communicating with the secondary oil chamber; an adjustment module having a first adjusting hole for providing a position for installing a first adjustment module, the first adjusting hole having an end communicating with the secondary channel group; a communication channel disposed at a predetermined position in the oil path separator seat and communicating with each of the first secondary channels and the ON/OFF installing slot.

Therefore, it is a primary objective of the present invention to provide a flow adjustment and oil path separation structure of a shock absorber, and the structure comprises an oil path separator seat, so that a bypass flow path exists between a primary oil chamber and a secondary oil chamber, and the structural design of an adjustment module is used to provide a higher setting and a greater range of the damping ratio.

A secondary objective of the present invention is to provide a flow adjustment and oil path separation structure of a shock absorber, wherein an oil path separator seat is provided for separating two oil chambers and the oil path of each channel, and the structure is applicable for the design having two oil chambers arranged parallel to each other, so that such structure also has the function of separating a plurality of channels, and the structure is applicable for more than one set of damping adjustment modules.

Another objective of the present invention is to provide a flow adjustment and oil path separation structure of a shock absorber, wherein at least one flow adjustment module is installed at a predetermined position of the oil path, and an oil path separator seat with the design of a bypass flow path, so as to achieve the effects of increasing the damping ratio conveniently when the shock absorber is situated in an ON status, reducing the chance of colliding or damaging related components to improve the service life of the components when impact forces are received, as well as reducing the compression and rebounce to improve the safety of the ride.

A further objective of the present invention is to provide a flow adjustment and oil path separation structure of a shock absorber, wherein the damping adjusting knob and buffering ON/OFF button are installed at the top of the primary oil chamber and the secondary oil chamber, so that when the whole shock absorbing structure is used at the front fork, each knob is situated at the top position of the front fork to provide a more convenient way for the rider to rotate the knob to change the damping ratio.

### BRIEF DESCRIPTION OF THE DRAWINGS

FIG. 1 is a perspective view of an oil path separator seat in accordance with a preferred embodiment of the present invention;
FIG. 2 is a planar view of an oil path separator seat in accordance with a preferred embodiment of the present invention;
FIG. 3 is a first cross-sectional view of an oil path separator seat in accordance with a preferred embodiment of the present invention;
FIG. 4 is a second cross-sectional view of an oil path separator seat in accordance with a preferred embodiment of the present invention;
FIG. 5 is a third cross-sectional view of an oil path separator seat in accordance with a preferred embodiment of the present invention;
FIG. 6 is a fourth cross-sectional view of an oil path separator seat in accordance with a preferred embodiment of the present invention;
FIG. 7 is a fifth cross-sectional view of an oil path separator seat in accordance with a preferred embodiment of the present invention;
FIG. 8 is a first exploded view of a preferred embodiment of the present invention;
FIG. 9 is a second exploded view of a preferred embodiment of the present invention;
FIG. 10 is a third exploded view of a preferred embodiment of the present invention;
FIG. 11 is a planar view of a preferred embodiment of the present invention;
FIG. 12 is a first cross-sectional view of a preferred embodiment of the present invention;
FIG. 13 is a second cross-sectional view of a preferred embodiment of the present invention;
FIG. 14 is a third cross-sectional view of a preferred embodiment of the present invention;
FIG. 15 is a first partial blowup view of a preferred embodiment of the present invention;
FIG. 16 is a fourth cross-sectional view of a preferred embodiment of the present invention;
FIG. 17 is a fourth cross-sectional view of a preferred embodiment of the present invention;
FIG. 18 is a schematic view showing an operating status of a preferred embodiment of the present invention;
FIG. 19 is a second partial blowup view of a preferred embodiment of the present invention; and
FIG. 20 is an exploded view of another preferred embodiment of the present invention.

### DESCRIPTION OF THE PREFERRED EMBODIMENTS

The technical characteristics, contents, advantages and effects of the present invention will be apparent with the detailed description of a preferred embodiment accompanied with related drawings as follows. The drawings are provided for the illustration, and same numerals are used to represent respective elements in the preferred embodiments. It is intended that the embodiments and drawings disclosed herein are to be considered illustrative rather than restrictive. Same numerals are used for representing same respective elements in the drawings.

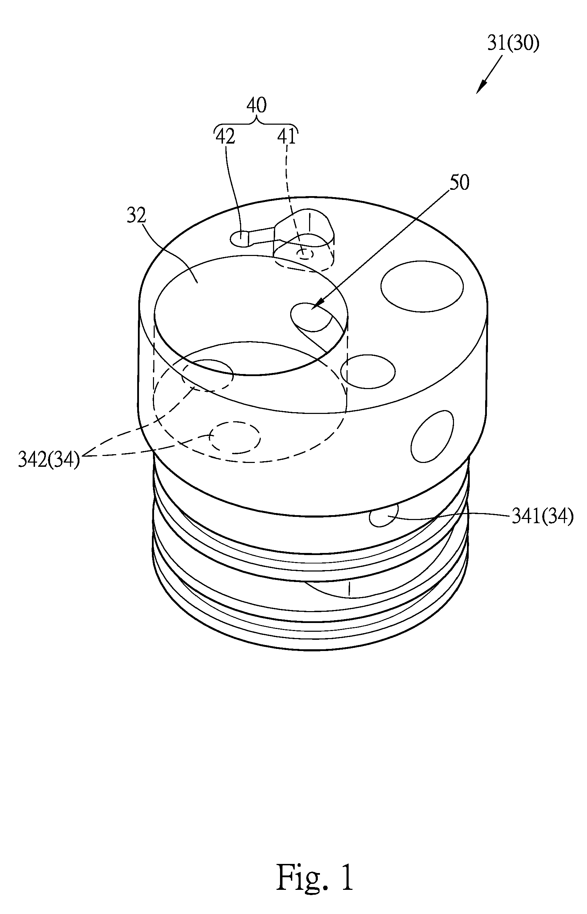

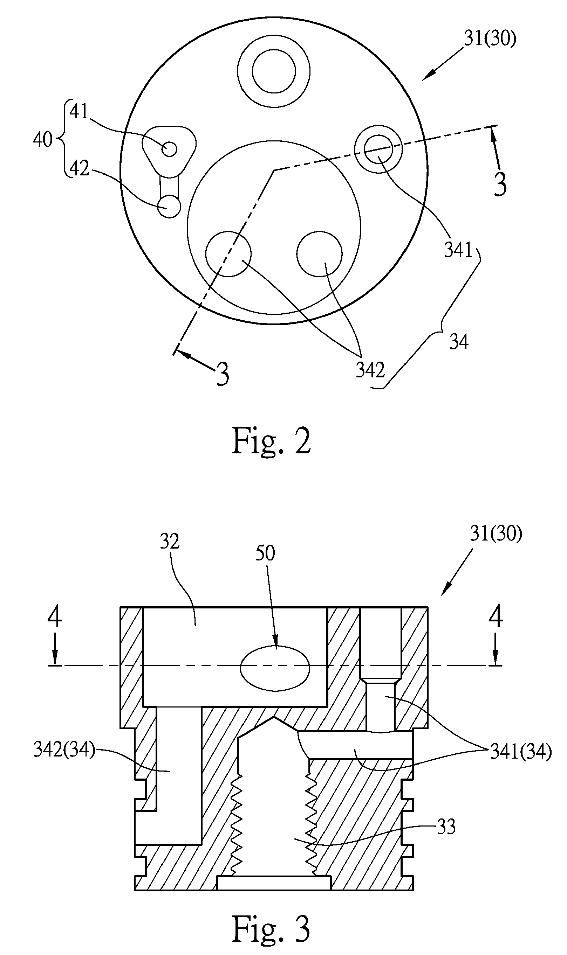

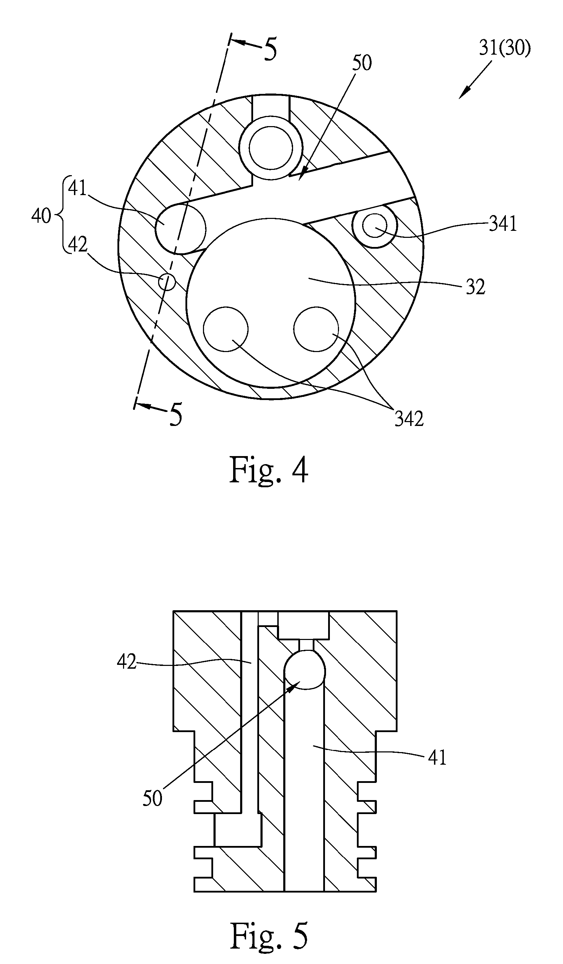

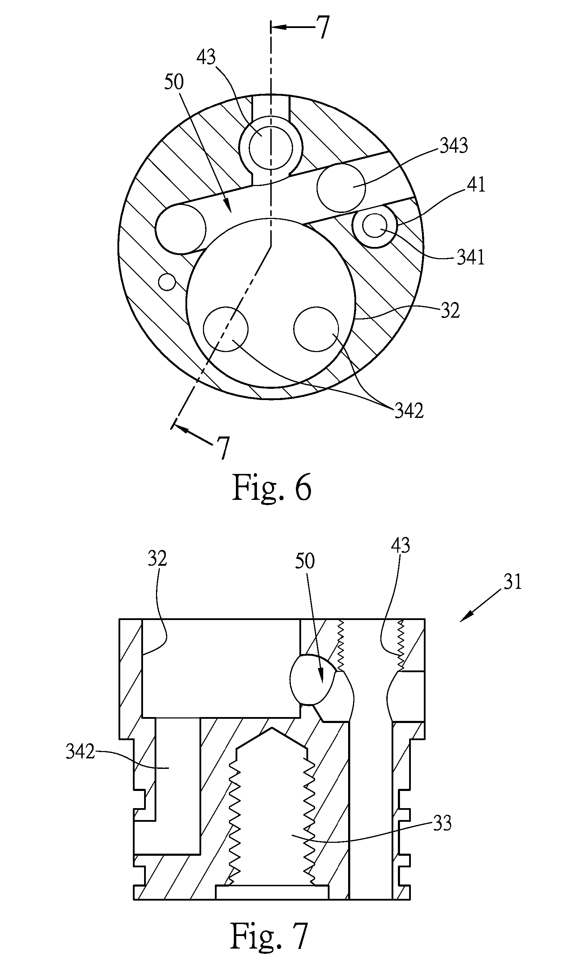

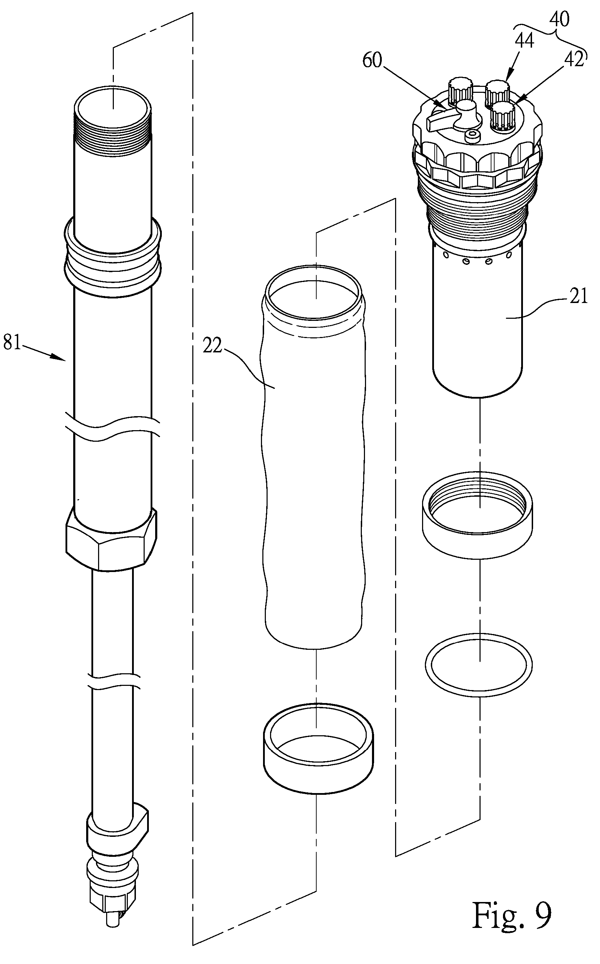

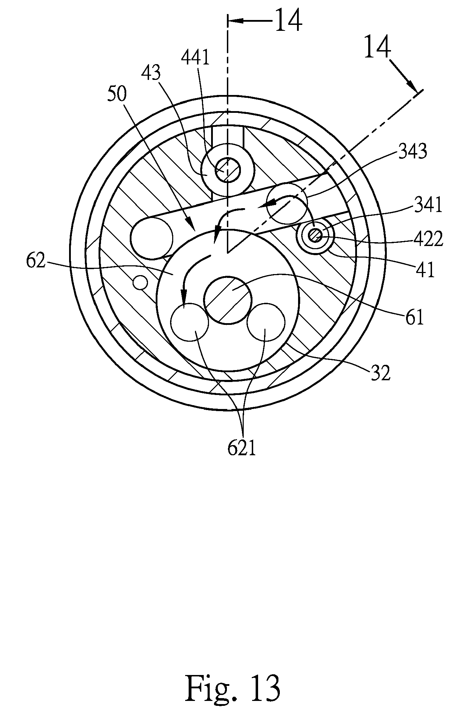

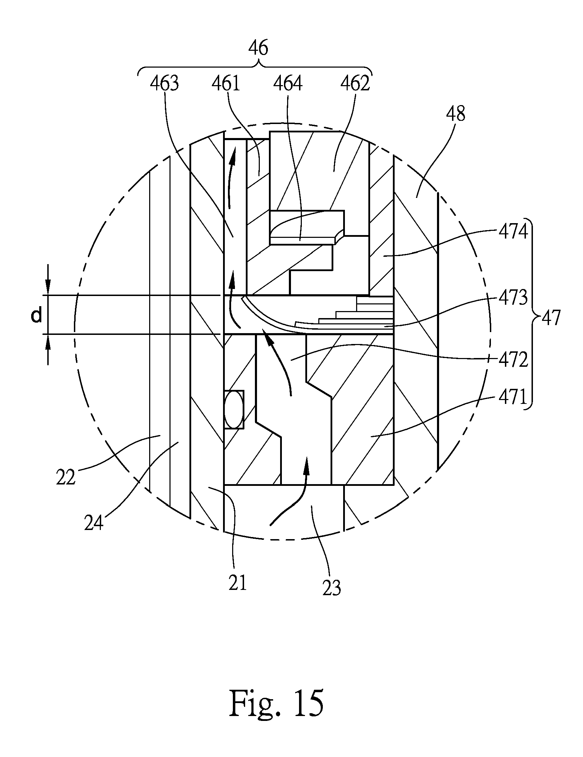

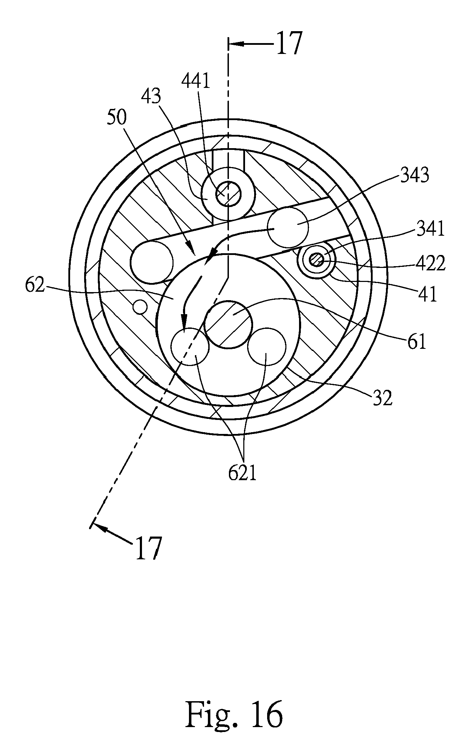

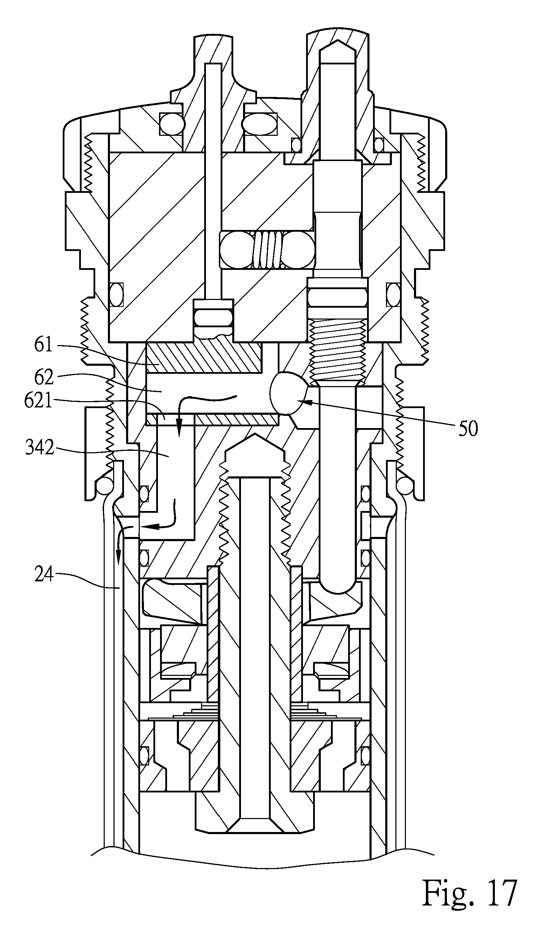

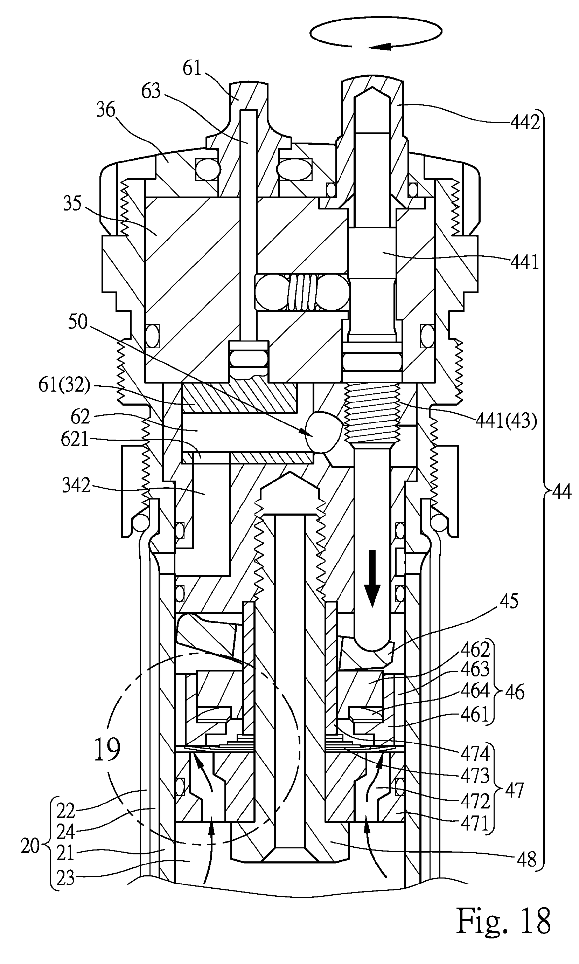

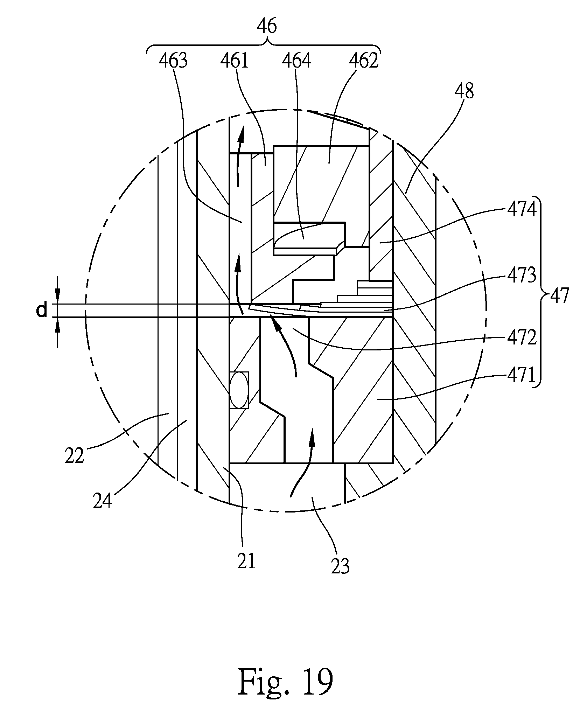

With reference to FIGS. 1 to 19 for a flow adjustment and oil path separation structure of a shock absorber in accordance with the present invention, the flow adjustment and oil path separation structure is applied to a front fork 81 of a bicycle, and the structure comprises: a shock absorption tube module 10, and a base tube module 20, an oil path separation module 30, an adjustment module 40, a communication channel 50, an ON/OFF switch module 60 and at least one speed adjustment module 70 installed in the shock absorption tube module 10.

The shock absorption tube module 10 is applied to the inner tube and the outer tube of the front fork of a bicycle, and includes an inner tube 11 and an outer tube 12 sheathed and linearly contracted and extended with respect to each other.

The base tube module 20 is installed at a predetermined position in the inner tube 11 and comprises: a first component 21 and a second component 22 sheathed on each other; a primary oil chamber 23 formed in the first component 21; and a secondary oil chamber 24 formed between the first and second components 21, 22, wherein the first component 21 is a tube, and the second component 22 is an oil bag made of an elastic material.

The oil path separation module 30 comprises: an oil path separator seat 31 in form of a seat; an ON/OFF installing slot 32, being a slot formed at a predetermined position of the oil path separator seat 31 for providing a position for installing the ON/OFF switch module 60; a primary channel 33, disposed at a predetermined position in the oil path separator seat 31 and communicated with the primary oil chamber 23; a secondary channel group 34, disposed at a predetermined position in the oil path separator seat 31 and including a first secondary channel 341 and a second secondary channel 342, and the first secondary channel 341 having an end communicated with the primary channel 33 and the other end communicated with a secondary oil chamber 24; and the second secondary channel 342 having an end communicated with the ON/OFF installing slot 32 and the other end communicated with the secondary oil chamber 24; a third secondary channel 343, installed at a predetermined position in the oil path separator seat 31 and having an end communicated with the communication channel 50 and the other end communicated with the primary oil chamber 23; a mounting seat 35, installed at the top of the oil path separator seat 31 for installing the ON/OFF switch module 60 and the adjustment module 70 therein; a top cover 36, installed at the top of the mounting seat 35 for partially installing the ON/OFF switch module 50 and the adjustment module 70 therein and partially exposing them therefrom.

The adjustment module 40 has a first adjusting hole 41 and an end communicated with the secondary channel group 34 and communicated with the ON/OFF installing slot 32 and the secondary channel group 34 through a communication channel 50; a first adjustment module 42, installed in the first adjusting hole 41, for adjusting the amount of hydraulic oil in the first adjusting hole 41; a second adjusting hole 43, being a penetrating hole formed at a predetermined position of the oil path separator seat 31, for providing a position for installing a second adjustment module (44), and the second adjusting hole 42 having an end communicated with the primary oil chamber 23, and the second adjustment module 44 being provided for adjusting the amount of hydraulic oil in the second adjusting hole 43; wherein the first adjustment module 42 comprises an adjusting rod 421 with an end disposed in the oil path separator seat 31 and being a predetermined position of the flow path of the hydraulic oil between the secondary channels 34 and the communication channel 50 and the other end extended towards the exterior of the oil path separator seat 31, and the adjusting rod 421 being capable of performing a linear displacement in the oil path separator seat 31; the adjusting rod 421 having an adjusting portion 422 which is in a conical shape and formed at an end of the flow path of the hydraulic oil; a knob 423 installed at a position of the adjusting rod 421 exposed from the oil path separator seat 31 and capable of driving the adjusting rod 421 to rotate synchronously, while driving the adjusting rod 421 to perform a linear displacement in the oil path separator seat 31 and change the position of the adjusting portion 422 of the adjusting rod 421 to adjust the amount and flow rate of the hydraulic oil assign through the flow path between the secondary channels 34 and the communication channel 50.

The second adjustment module 44 comprises an adjusting rod 441 passed through the second adjusting hole 43 and having an end extended into the primary oil chamber 23 and coupled to an abutting member 45 and the other end extended towards the exterior of the oil path separator seat 31; a knob 442 installed at a position of the adjusting rod 441 exposed from the oil path separator seat 31 and capable of driving the adjusting rod 441 to rotate synchronously, while driving the adjusting rod 441 to linearly displace in the oil path separator seat 31 to press the abutting member 45 to produce a movement; wherein the second adjustment module 44 comprises a floating component 46 and an adjustment module 47 installed in the primary oil chamber 23; the adjustment module 47 is provided for circulating the hydraulic oil and using a positioning tube 48 to sequentially pass the adjustment module 47, the floating component 46 and the abutting member 45 and then fixing them onto the oil path separator seat 31; the floating component 46 is situated at a linear moving status in the primary oil chamber 23; the adjusting rod 441 and the abutting member 45 are synchronously and linearly moved and attached to the floating component 46 for performing a synchronous displacement, so as to change the distance between the floating component 46 and the adjustment module 47 and adjust the amount and flow rate of hydraulic oil stored in the primary oil chamber 23 and passing through the adjustment module 47.

The floating component 46 may be situated at a floating status of a linear displacement and comprises a first floating member 461 and a second floating member 462 sheathed on each other, and the first floating member 461 is abutted against and coupled to the abutting member 45; the second floating member 462 is disposed outside the first floating member 461, and the second floating member 462 has a plurality of circulating portions 463 disposed at predetermined positions respectively and provided for circulating the hydraulic oil; and a reed 464 is installed between the first and second floating members 461, 462 for providing a compressible elastic space between the first and second floating members 461, 462.

The adjustment module 47 comprises: an adjusting base 471; a plurality of penetrating holes 472 formed thereon and provided for circulating a hydraulic oil; a regulating spring member 473, which is a circular laminated spring, an elastic plate, or a reed, installed onto the adjusting base 471 and capable of effectively opening and closing each of the penetrating holes 472, and the regulating spring member 473 being capable of changing the distance between the penetrating holes 472 according to the pressure of the hydraulic oil; an abutting ring 474, being in the shape of a circular base disposed outside the positioning tube 48, and having an edge abutted against and fixed to the oil path separator seat 31 and the other side abutted at the central position of the regulating spring member 473.

The communication channel 50 is disposed at a predetermined position in the oil path separator seat 31 and communicated with the first secondary channel 341, the ON/OFF installing slot 32, the third secondary channel 343 and the second adjusting hole 43.

The ON/OFF switch module 60 is installed in the ON/OFF installing slot 32 and provided for switching the flow ON/OFF status of the secondary channel group 34. If the ON/OFF switch module 32 is switched to ON, so that the primary channel 33 and the secondary channel group 34 are situated at a shock absorbing status, and the hydraulic oil will flow from the primary oil chamber 23 through the primary channel 33 and then sequentially pass through the secondary channel group 34, the communication channel 50, and the ON/OFF installing module 60 to the secondary oil chamber 24 to define a shock absorbing and buffering status when an impact pressure is encountered; the ON/OFF switch module 60 includes a switch seat 61 installed at a predetermined position in the ON/OFF installing slot 32 and another predetermined position of the ON/OFF switch module 60 passing through the oil path separator seat 31 and the mounting seat 35, and having an end extended towards the exterior of the top cover 36; the switch seat 61 includes a diversion channel 62 connected to the secondary oil chamber 24 and capable of guiding the hydraulic oil stored in the communication channel 50 to flow to the secondary oil chamber 24, and the switch seat 61 being rotated to a predetermined angle to switch and turn on or off the diversion channel 62, such that the hydraulic oil circulating in the primary oil chambers 23, the secondary oil chamber 24 and the oil path separation module 31 is situated in a buffering locked status or a buffering shock absorbing status; an ON/OFF switch button 63, disposed at a position of the switch seat 61 exposed from the top cover 36 and provided for driving the switch seat 61 to rotate synchronously and switch the ON status of the diversion channel 62; the diversion channel 62, including two diversion holes 621 formed on the switch seat 61 and the switch seat 61 being rotated to a predetermined angle to align the diversion hole 621 with the second secondary channel 342 and flow the, hydraulic oil between the primary oil chambers 23, the secondary oil chamber 24 and the oil path separator seat 31 to define an buffer ON status; or the switch seat 61 being rotated to a predetermined angle to align the diversion hole 621 alternately with the second secondary channel 342 to prevent the hydraulic oil to flow between the primary oil chambers 23, the secondary oil chamber 24 and the oil path separator seat 31 to define a buffer locked status.

Each speed adjustment module 70 is installed in the mounting seat 35 and abutted at a predetermined position in a radial direction of the adjusting rod 421, 441 and includes at least one sectioned portion 71, 72 in a planar form disposed around each adjusting rod 421, 441; each speed adjustment module 70 has two steel balls 73, 74 and an elastic member 75, 76 coupled to each other and installed in the mounting seat 35, wherein one of the steel balls 73, 74 is abutted and coupled to the sectioned portion 71, 72 effectively.

With the aforementioned components, the oil path separator seat 31 provides a bypass flow structure between the primary oil chambers 23 and the secondary oil chamber 24, and design of the adjustment module 40 is adopted to provide a higher setting of the damping ratio and increase the range of the damping ratio. In the meantime, when an impact force is encountered, the chance of colliding or damaging related components is reduced to achieve the effects of extending service life, and reducing the compression and rebounce during the buffering process, improving the safety of riding, and the knobs 423 442 and the ON/OFF switch button 63 are situated at the top of the bicycle front fork 80 to provide a convenient and practical way to rotate the knobs and adjust and switch the damping ratio.

The above and other objects, features and advantages of the present invention will become apparent from the following detailed description taken with the accompanying drawing.

With reference to FIGS. 1 to 7, the integral structure of the present invention, comprises the ON/OFF installing slot 32, the primary channel 33, the first and second secondary channels 341, 342, the first and second adjusting holes 41, 43 and the communication channel 50 as well as the position and space of each component, wherein the first, second and third secondary channels 341, 342, 343 are communicated with each other, and the first secondary channel 341 and the primary channel 33 are communicated with each other, and the ON/OFF installing slot 32 and the second secondary channel 342 are communicated with each other, and the third secondary channel 343 and the primary channel are arranged parallel to each other; the first adjusting hole 41 is coaxially installed at the top of the first secondary channel 341, and the second adjusting hole 43 is penetrated through the oil path separator seat 31; and the communication channel 50, the first and third secondary channels 341, 343, the ON/OFF installing slot 32 and the first and second adjusting holes 41, 43 are communicated with one another.

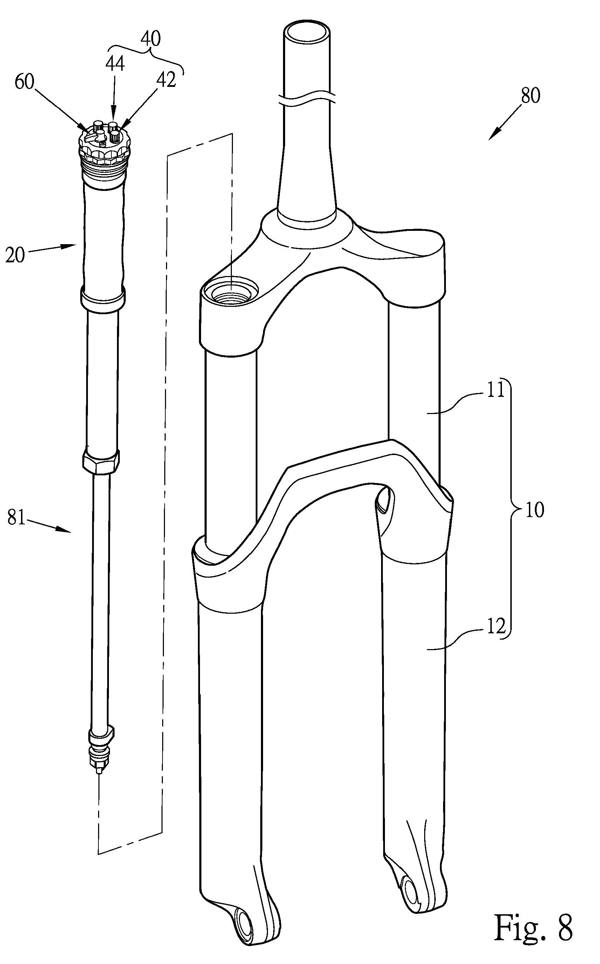

The present invention is applied and installed at the bicycle front fork 80. With reference to FIGS. 8 to 15, the oil path separator seat 31 is disposed at a shock absorption tube module 10 which comprises the inner tube 11 and the outer tube 12 sheathed on each other, and a front fork shock absorbing module 81 installed therein, and the base tube module 20 is installed at the top of the front fork shock absorbing module 81. When the present invention is installed, the second component 22 is fixed outside the first component 21, and then the switch seat 61 is installed into the ON/OFF installing slot 32, and the adjusting rods 421, 441 are passed into the first and second adjusting holes 41, 43 respectively, and the speed adjustment module 70 is installed in the mounting seat 35, and one of the steel balls 73, 74 is abutted and coupled to the adjusting rod 421, 441 or the sectioned portion 71, 72 of the switch seat 61, and the positioning tube 48 is used to sequentially pass the adjusting base 471, the regulating spring member 473, the first floating member 461, the reed 464, the second floating member 462 and the abutting member 45, so that an end of the positioning tube 48 is screwed and installed in the primary channel 33 under the oil path separator seat 31 and an edge of the adjusting rod 441 exposed from the bottom of the oil path separator seat 31 is abutted at and coupled to the abutting member 45, and then the oil path separator seat 31, the mounting seat 35, the switch seat 61 and the adjustment module 70 are installed in the first component 21, and the top cover 36 is installed onto the mounting seat 35. Now, an extended end of each of the adjusting rods 421, 441 and the switch seat 61 is exposed from the top cover 36, and each knob 423, 442 is installed between the top cover 36 and the mounting seat 35, and an end of each knob 423, 442 is passed and installed to the top cover 36 and exposed from the top cover 36, and the ON/OFF switch button 63 is installed to a distal end exposed form the switch seat 61, and finally a positioning ring 25 is used to fix the aforementioned components into the first component 21.

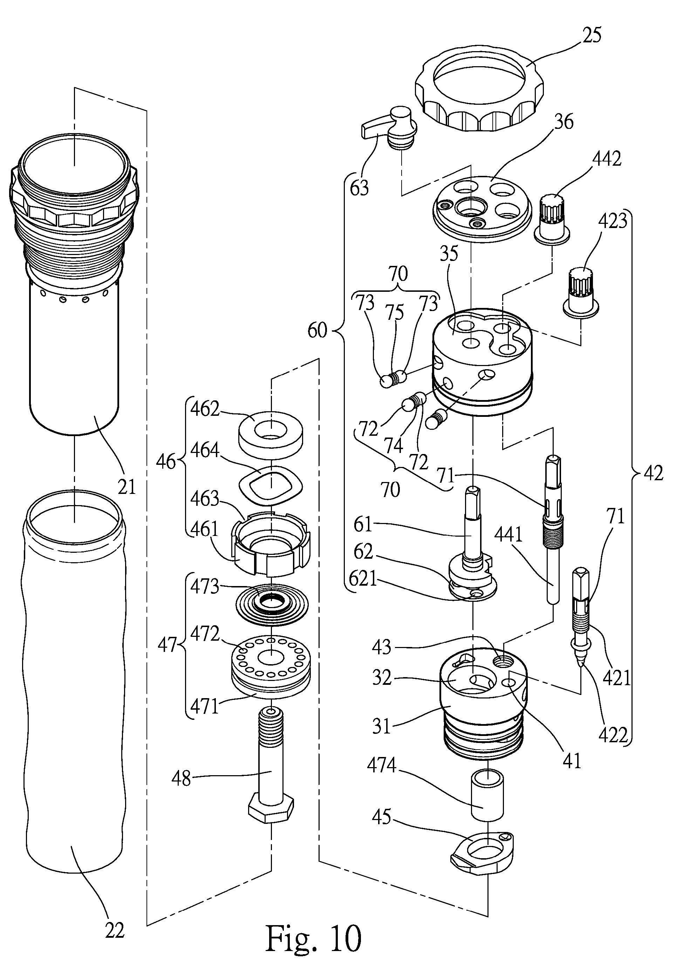

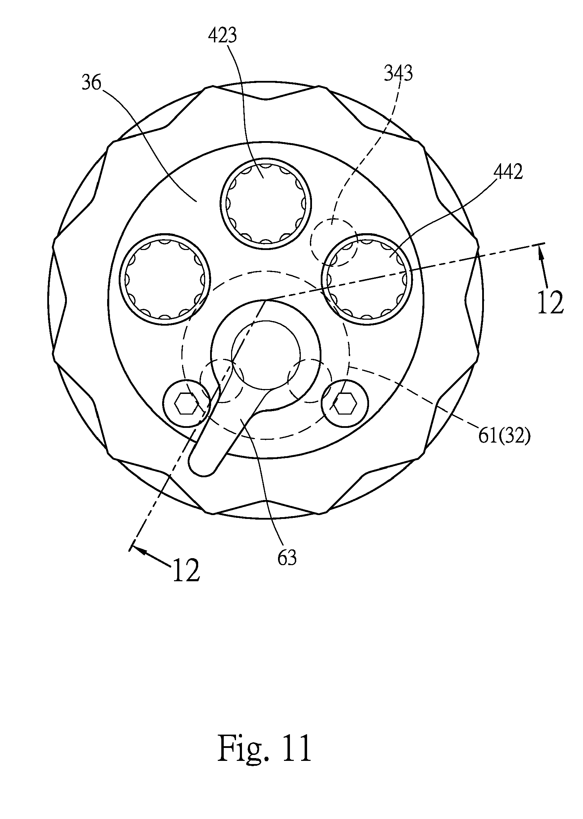

With reference to FIGS. 10 and 11 for the ON/OFF buffering status of the present invention, when the ON/OFF switch button 63 is switched to an ON status, the switch seat 61 is driven to rotate synchronously. Now, the hydraulic oil in the diversion hole 621 corresponsive to the second secondary channel 342, each of the primary oil chambers 23, the secondary oil chamber 24, and the oil path separation module 30 are in a flowing status, and the flowing takes place in two channels simultaneously.

The first channel is a path for circulating the hydraulic oil. With reference to FIGS. 11 to 13, the space in the first component 21 is compressed when an impact force is encountered, so that the hydraulic oil enters into the primary channel 33 from the primary oil chamber 23 and passes through the first secondary channel 341 and the communication channel 50 sequentially into the ON/OFF installing slot 32, and then passes through the diversion channel 62 and the diversion hole 621 of the switch seat 61 before flowing into the second secondary channel 342, and finally passes through the first component 21 and flows to the secondary oil chamber 24. When the impact force no longer exists, the space in the first component 21 resumes its original volume, hydraulic oil, and the hydraulic oil flows from the secondary oil chamber 24 to the second secondary channel 342 through the first component 21 and then passes through the diversion channel 62 and the diversion hole 621 of the switch seat 61 before exiting the ON/OFF installing slot 32 and entering into the communication channel 50, and the hydraulic oil further flows through the first secondary channel 341 and the primary channel 33, and finally returns to the primary oil chamber 23.

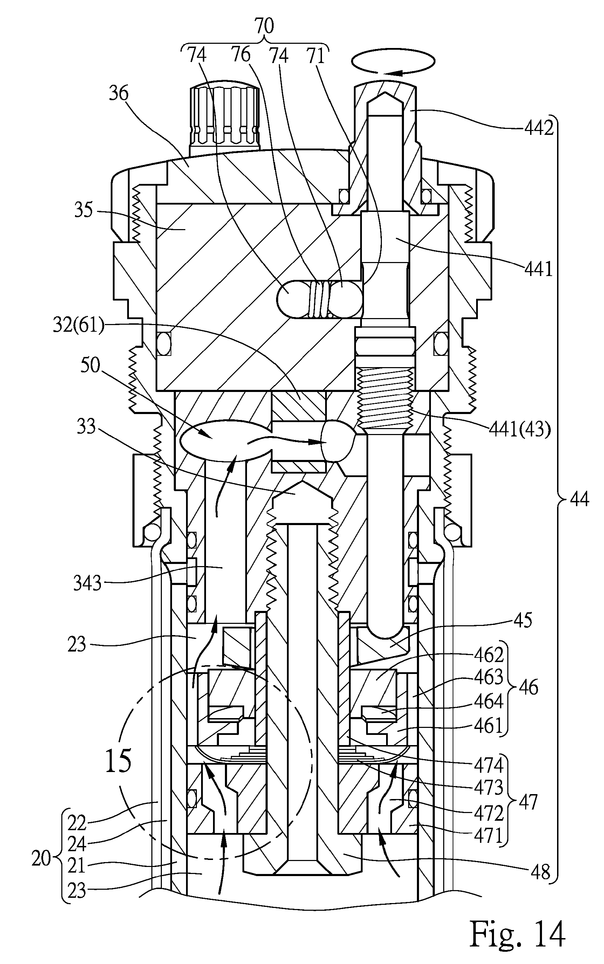

The second channel is also a path for circulating the hydraulic oil. With reference to FIGS. 14 to 17, the space in the first component 21 is compressed when an impact force is encountered, and the hydraulic oil enters into a penetrating hole 472 of the adjusting base 471 from the primary oil chamber 23, and sequentially passes through the adjusting spring 473 and the circulating portion 463 before entering into the third secondary channel 343, and further flows to the communication channel 50 and enters into the ON/OFF installing slot 32, and then passes through the diversion channel 62 and the diversion hole 621 of the switch seat 61 before flowing into the second secondary channel 342, and finally passes through the first component 21 and flows into the secondary oil chamber 24. When the impact force no longer exists, the space in the first component 21 resumes its original volume, and the hydraulic oil starts to return from the secondary oil chamber 24 and flows through the first component 21 to the second secondary channel 342, and passes through the diversion channel 62 and the diversion hole 621 of the switch seat 61 before exiting the ON/OFF installing slot 32 and entering into the communication channel 50, and the hydraulic oil sequentially passes through the third secondary channel 343, the circulating portion 463, the adjusting spring 473 and the penetrating hole 472 of the adjusting base 471, and finally returns into the primary oil chamber 23.

When the ON/OFF switch button 63 is rotated to the OFF status, the switch seat 61 is driven to rotate synchronously. Now, the diversion hole 621 is aligned alternately with the second secondary channel 342, and the hydraulic oil in each of the primary oil chambers 23, the secondary oil chamber 24 and the oil path separation module 30 are not situated in a flowing status, so that the buffering function is disabled.

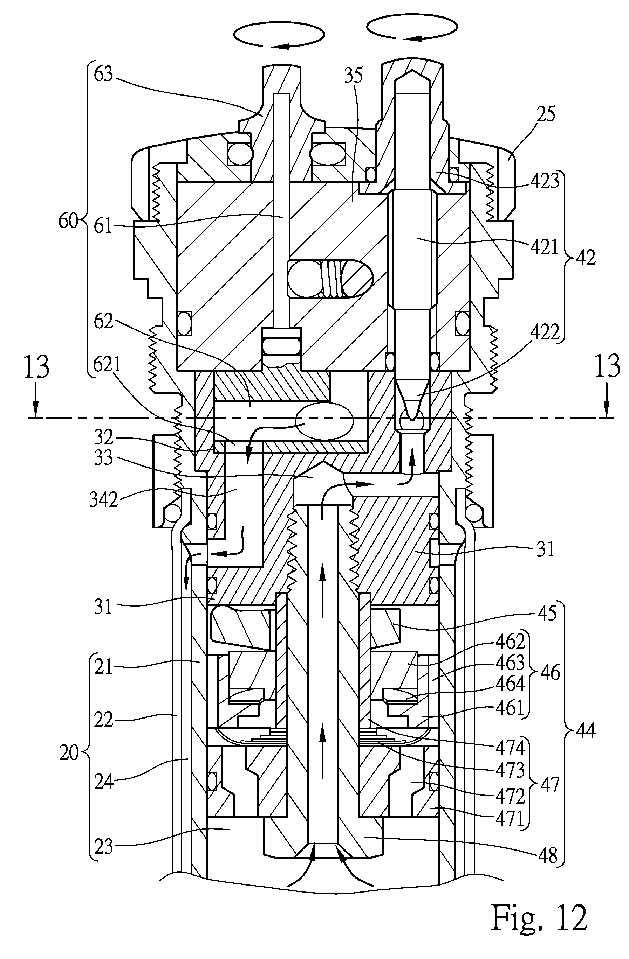

With reference to FIG. 12 for adjusting the damping ratio of the first adjustment module 42 of the present invention, when the knob 423 is rotated, the adjusting rod 421 is driven to produce a linear displacement synchronously. Now, the adjusting portion 422 occupies the channel space of the first adjusting hole 41, so as to change the flow rate of the hydraulic oil passing through this channel. When the space of the channel occupied by the adjusting portion 422 becomes greater the flow rate of the hydraulic oil becomes slower, and the damping ratio becomes greater, and the speed of compression and rebounce for the shock absorption becomes slower. When the space of the channel of the first adjusting hole 41 occupied by the adjusting portion 422 becomes smaller, the flow rate of the hydraulic oil becomes faster, and the damping ratio becomes smaller, and the speed of compression and rebounce of the shock absorption becomes faster.

With reference to FIGS. 14, 15, 18 and 19 for adjusting the damping ratio of the second adjustment module of the present invention, when the knob 442 is rotated, the adjusting rod 441 is driven to produce a linear displacement synchronously. Now, the bottom of the adjusting rod 441 is abutted and coupled to the abutting member 45 to synchronously press the floating component 46 in the floating status to produce a displacement. Now, a gap d exists between the first floating member 461 and the adjusting base 471, and the regulating spring member 473 is disposed in the space of the gap d, so that the linear displacement of the adjusting rod 441 can change the gap d.

When the gap d is relatively large, the hydraulic oil flows towards the secondary oil chamber 24 since the impact force produces a pressure, and the elastic regulating spring member 473 is pushed by the hydraulic oil and flipped outwardly to open the penetrating hole 472 of the adjusting base 471. After the regulating spring member 473 is flipped outwardly, the top of the regulating spring member 473 is limited by a distal surface of the first floating member 461 to change the extent of being flipped outwardly. When the extent of the regulating spring member 473 being flipped outwardly becomes smaller, the diameter of the penetrating hole 472 becomes smaller, and the flow rate of the hydraulic oil becomes slower, and the damping ratio becomes greater, and the speed of compression and rebounce for the shock absorption becomes slower. When the extent of the regulating spring member 473 being flipped outwardly becomes greater, the diameter of the penetrating hole 472 becomes greater, and the flow rate of the hydraulic oil becomes faster, and the damping ratio becomes smaller, and the speed of compression and rebounce for the shock absorption becomes faster.

In the present invention, the oil path separator seat 31 provides two channels including the primary channel 33 and the third secondary channel 343 for the circulation of the hydraulic oil. When a large impact force is encountered, the second channel is a channel provided for the circulation, while offering a lower numerical range of the damping ratio of the shock absorber. In other words, the greater the flow, the faster the flow rate. Therefore, the speed of compression and rebounce for the shock absorption is fast. On the other hand, the present invention applies the oil path separator seat 31 to provide a bypass flow structure between the primary oil chamber 23 and the secondary oil chamber 24, so as to offer a higher numerical range of the damping ratio of the shock absorber. In other words, the smaller the flow, the smaller the flow rate. Therefore, the speed of compression and rebounce for shock absorption is slow. Overall speaking, the setting range of the damping ratio of the present invention is greater than that of the conventional structure, and the invention has the effect of increasing the numerical range of the damping ratio.

Since the present invention has a greater numerical range of the damping ratio and integrates a plurality of channels to diversify the internal liquid pressure and impact force of the hydraulic oil, so that when an impact force is encountered, the invention has the effects of lowering the chance of colliding or damaging related components, extending the service life of components, reducing the compression and rebounce of the shock absorption caused by the high damping ratio, preventing riders from losing their balance caused by a large position differentiation of compression and rebounce during the shock absorbing process, and improving the safety of riding effectively.

The present invention provides the oil path separator seat 31 for separating the paths of the hydraulic oil appropriately and includes the primary channel 33 and secondary channel group 34 to flow the hydraulic oil to each of the primary oil chambers 23 or the secondary oil chamber 24 according to a predetermined setting and also the effects of integrating the hydraulic oil and dividing the hydraulic oil. On the other hand, the oil path separator seat 31 is not just applied to the structure having each of the primary oil chambers 23 and the secondary oil chamber 24 configured to be perpendicular to each other only, but it is also applied to the structure having each of the primary oil chambers 23 and the secondary oil chamber 24 configured to be parallel to each other as well.

In the present invention, the oil path separator seat 31 is adopted to provide a better bypass flow structure between each of the primary oil chambers 23 and the secondary oil chamber 24 and integrates the structural design of the adjustment module 40. Further, the knob 423, 442 and the switch seat 61 are installed at the top of the bicycle front fork, so that a rider just needs to stop the bike and sit on the bike frame to adjust the damping ratio by bending down slightly and rotating the knobs 423, 442 and the switch seat 61 by hands before starting the ride again. The present invention provides a convenience application, even when the rider needs to rotate the knobs to make adjustment and ride repeatedly. The operations of enabling/disabling the shock absorption and adjusting the damping ratio in accordance with the present invention are user-friendly, and overcome the inconvenience of the conventional way of making the adjustment that requires the rider to leave the bike frame and squat down to make the adjustment.

The adjustment module 40 of the present invention usually comes with a design having a plurality of regulating mechanisms, and different positions and channels of the related components installed in the first and second adjustment modules 42, 44 are used to provide different damping effects, so that the numerical range of adjusting the damping ratio is more precise to provide a more sensitive buffering adjustment to meet the requirements of professional riders.

The floating component 46 of the present invention is a two-piece component including the first and second floating members 461, 462, and the first and second floating member 461, 462 are coupled by the reed 463, so that the floating component 46 can float in the oil chamber and displace linearly, while providing a compressed space and an elastic force to reduce or eliminate the internal liquid pressure of the hydraulic oil effectively and providing a second buffering function.

In the present invention, the adjustment module 47 includes a regulating reed 473 installed between the first floating member 461 and the adjusting base 471 and mainly used for covering the penetrating holes 472 effectively, and the diameter of the penetrating holes 472 varies, so that the amount and flow rate of the hydraulic oil vary as well. The regulating reed 473 has an elastic restoring force, so that when the liquid pressure and the impact force of the hydraulic oil no longer exist, the regulating reed 473 automatically resume its original shape to cover each of the penetrating holes 472 completely, so that the second oil path is not in a flowing status. When a large impact force is exerted onto the second adjustment module 44 of the present invention, the bypass channel is opened, so as to achieve the effect of bypassing the hydraulic oil quickly and dividing the impact pressure effectively.

In the speed adjustment module 70 of the present invention, each of the steel balls 73, 74 is attached and installed onto each of the adjusting rods 421, 441 and the switch seat 61, and each of the sectioned portions 71, 72 is in a planar shape, and the elastic force of the elastic member 75, 76 is provided for compressing and restoring the steel balls 73, 74 to their original positions, so that when each of the adjusting rods 421, 441 and the switch seat 61 is rotated, a click sound and/or a slight vibration is produced to achieve the effect of making adjustments at different levels.

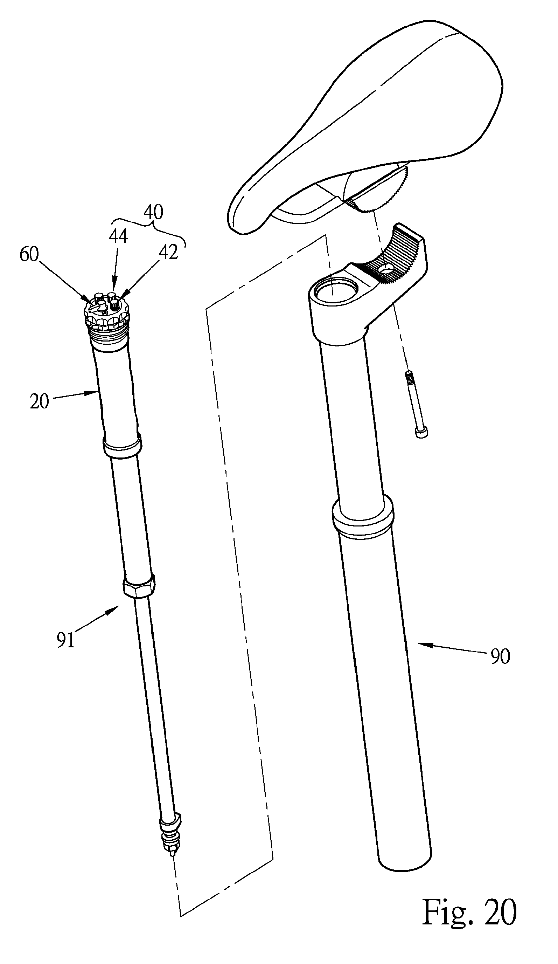

With reference to FIG. 20 for another preferred embodiment of the present invention, this embodiment is an implementation mode applied in a seat post 90 of a bicycle, wherein the seat post is the shock absorption tube module 10 of the present invention and comprises an inner tube 11 and an outer tube 12 sheathed and linearly contracted and extended with respective to each other, a seat post shock absorbing module 91 installed in the shock absorption tube module 10, a base tube module 20 installed at the top of the shock absorbing module 91 of the seat post 90, and components including an oil path separation module 30, an adjustment module 40, a communication channel 50, an ON/OFF switch module 60 and level adjustment module 70 installed in the base tube module 20.

The installation, oil path, and operating status of this preferred embodiment are the same as those of the previous preferred embodiment. The present invention may be applied to a front fork and a seat post of a bicycle, or a shock absorbing system of a motorcycle or a motor vehicle, or various machines or devices to achieve the foregoing expected effects.

In summation of the description above, the flow adjustment and oil path separation structure of a shock absorber in accordance with the present invention provides a shock absorber with better sensitivity, higher precision of adjusting the damping ratio, and greater numerical range of damping ratio, and the invention comes with an oil path separator seat with a bypass flow path structure and a design of two channels for bypassing the hydraulic oil and dividing the pressure, so that users may adjust the amount and flow rate of the hydraulic oil to achieve the effects of lowering the chance of colliding and damaging the components, reducing the compression and rebounce for the shock absorption, improving the safety of riding, and providing a convenient way for the riders to adjust and switch the knob by designing the knob at the top of the front fork. Therefore, the invention provides a highly compatible and practical shock absorbing structure.

## Claims

1. An oil path separation structure of a shock absorber, comprising:
an oil path separator seat being substantially in the shape of a seat;
an ON/OFF installing slot being a groove formed at a predetermined position of the oil path separator seat for providing a position for installing an ON/OFF switch module;
a primary channel disposed at a predetermined position in the oil path separator seat, and communicating with a primary oil chamber;
a secondary channel group disposed at a predetermined position of the oil path separator seat, and having a first secondary channel and a second secondary channel, the first secondary channel having an end communicating with the primary channel and the other end communicating with a secondary oil chamber, the second secondary channel having an end communicating with the ON/OFF installing slot and the other end communicating with the secondary oil chamber;
an adjustment module having a first adjusting hole for providing a position for installing a first adjustment module, the first adjusting hole having an end communicating with the secondary channel group;
a communication channel disposed at a predetermined position in the oil path separator seat and communicating with each of the first secondary channels and the ON/OFF installing slot.

2. A flow adjustment structure of a shock absorber, comprising:
a shock absorption tube module having an inner tube and an outer tube in form of a telescope, and linearly contractible and extendable with respect to each other;
a base tube module installed at a predetermined position in the inner tube, and having a first component and a second component sheathed on one another, the first component having a primary oil chamber formed therein, and a secondary oil chamber formed between the first and second components;
an oil path separation module having an oil path separator seat, an ON/OFF installing slot concavely formed at a predetermined position and communicating with the secondary oil chamber, the oil path separator seat having a primary channel communicating with the primary oil chamber, a secondary channel group communicating with the secondary oil chamber, an end of the secondary channel communicating with the primary channel;
an adjustment module having a first adjusting hole, an end communicating with the secondary channel group, a communication channel communicating with each of the ON/OFF installing slot and secondary channel group, a first adjustment module installed in the first adjusting hole for adjusting the amount of hydraulic oil following in the first adjusting hole, and
an ON/OFF switch module installed in the ON/OFF installing slot for switching flow ON/OFF status of the secondary channel group, such that when the ON/OFF switch module is switched ON, each of the primary channel and the secondary channel group is situated in a shock absorbing status, when there is an impact pressure, the hydraulic oil flows from the primary oil chamber through the primary channel and sequentially passes through the secondary channel group and the communication channel, and enters into the ON/OFF installing module before flowing to the secondary oil chamber, so as to define a shock absorbing and buffering status.

3. The flow adjustment structure of a shock absorber according to claim 2, wherein the secondary channel group includes a first secondary channel and at least one second secondary channel, the first secondary channel has an end communicating with the primary channel and the other end communicating with a secondary oil chamber, the second secondary channel has an end communicating with the ON/OFF installing slot and the other end communicating with the secondary oil chamber, the communication channel communicates with each of the first secondary channel and ON/OFF installing slot at the same time.

4. The oil path separation structure of a shock absorber according to claim 1, wherein the secondary channel group includes a third secondary channel defined in the oil path separator seat, the third secondary channel has an end communicating with the communication channel and the other end communicating with the primary oil chamber, and the communication channel is communicated with each of the first secondary channel, the ON/OFF installing slot, the third secondary channel, and the second adjusting hole at the same time.

5. The oil path separation structure of a shock absorber according to claim 1, wherein the adjustment module has a second adjusting hole which is a penetrating hole formed in the oil path separator seat for providing a position for installing a second adjustment module, the second adjusting hole has an end communicating with the primary oil chamber, the second adjustment module adjusts the amount of hydraulic oil in the second adjusting hole.

6. The oil path separation structure of a shock absorber according to claim 1, wherein the adjustment module has a second adjusting hole which is a penetrating hole formed in the oil path separator seat for providing a position for installing a second adjustment module, the oil path separation module has a mounting seat installed at the oil path separator seat for providing a position for installing each of the ON/OFF switch module and the first and second adjustment modules therein, the oil path separation module has a top cover installed to the top of the mounting seat for providing a position for installing each of the ON/OFF switch module and the first and second adjustment modules partially therein and exposed partially therefrom.

7. The oil path separation structure of a shock absorber according to claim 1, wherein the first adjustment module includes an adjusting rod with an end disposed in the oil path separator seat, which is a flow path of the hydraulic oil between each of the secondary channels and the communication channel, the other end of the adjusting rod is extended to the exterior of the oil path separator seat, the adjusting rod is linearly displaceable in the oil path separator seat, the adjusting rod has an adjusting portion in a shape of a cone and formed at an end of the flow path of the hydraulic oil, a knob is installed at the adjusting rod exposed from the oil path separator seat for driving the adjusting rod to rotate synchronously, while driving the adjusting rod to displace linearly in the oil path separator seat, an amount and flow rate of the flow path of the hydraulic oil flowing between each of the secondary channels and the communication channel is adjusted by a change of positions of the adjusting portion of the adjusting rod.

8. The oil path separation structure of a shock absorber according to claim 1, wherein the adjustment module has a second adjusting hole which is a penetrating hole formed at the oil path separator seat for providing a position of installing a second adjustment module, the second adjustment module has an adjusting rod which passes through the second adjusting hole and has an end extended into the primary oil chamber and is coupled to an abutting member, the second adjustment module has a floating component and an adjustment module installed in the primary oil chamber, the adjustment module is provided for circulating a hydraulic oil and has a positioning tube to sequentially pass and install the adjustment module, the floating component and the abutting member so as to install and position the adjustment module to the oil path separator seat, the floating component in the primary oil chamber is situated in a linearly moving status, the adjusting rod and the abutting member synchronously and linearly move with each other to abut the floating component for a synchronous displacement, so as to adjust a distance between the floating component and the adjustment module, and to adjust a amount and flow rate of the hydraulic oil in the primary oil chamber that passes through the adjustment module.

9. The oil path separation structure of a shock absorber according to claim 8, wherein the adjustment module comprises an adjusting base which has a plurality of penetrating holes formed therein for circulating the hydraulic oil, a regulating spring member is installed onto the adjusting base to open or close each of the penetrating holes, and to adjust a distance between the resgulating spring member and the penetrating holes according to the pressure of the hydraulic oil, an abutting ring is in a shape of a circular base and installed to outside the positioning tube, the abutting ring has an end abutted and positioned at the oil path separator seat, and the other side is abutted and coupled to a central position of the regulating spring member.

10. The oil path separation structure of a shock absorber according to claim 8, wherein the floating component comprises a first floating member and a second floating member coupled to each other, the first floating member abuts against the abutting member, the second floating member is installed to outside the first floating member and has a plurality of circulating portions for circulating the hydraulic oil, a reed is installed between the first and second floating members for providing a compressible elastic space between the first and second floating members.

11. The oil path separation structure of a shock absorber according to claim 5, wherein the oil path separation module comprises a mounting seat which is installed at the top of the oil path separator seat for providing a position for installing each of the ON/OFF switch module and the first and second adjustment modules therein, each of the first and second adjustment modules has a speed adjustment module installed in the mounting seat and abuts against the adjust ord along the radial direction of the adjusting rod, the speed adjustment module has at least one sectioned portion in a planar shape and disposed around the adjusting rod, and the speed adjustment module comprises at least one steel ball and an elastic member coupled to each other and installed in the mounting seat, the steel ball is effectively coupled and abutted against the sectioned portion.

12. The oil path separation structure of a shock absorber according to claim 2, wherein the secondary channel group includes a third secondary channel defined in the oil path separator seat, the third secondary channel has an end communicating with the communication channel and the other end communicating with the primary oil chamber, and the communication channel is communicated with each of the first secondary channel, the ON/OFF installing slot, the third secondary channel, and the second adjusting hole at the same time.

13. The oil path separation structure of a shock absorber according to claim 2, wherein the adjustment module has a second adjusting hole which is a penetrating hole formed in the oil path separator seat for providing a position for installing a second adjustment module, the second adjusting hole has an end communicating with the primary oil chamber, the second adjustment module adjusts the amount of hydraulic oil in the second adjusting hole.

14. The oil path separation structure of a shock absorber according to claim 2, wherein the adjustment module has a second adjusting hole which is a penetrating hole formed in the oil path separator seat for providing a position for installing a second adjustment module, the oil path separation module has a mounting seat installed at the oil path separator seat for providing a position for installing each of the ON/OFF switch module and the first and second adjustment modules therein, the oil path separation module has a top cover installed to the top of the mounting seat for providing a position for installing each of the ON/OFF switch module and the first and second adjustment modules partially therein and exposed partially therefrom.

15. The oil path separation structure of a shock absorber according to claim 2, wherein the first adjustment module includes an adjusting rod with an end disposed in the oil path separator seat, which is a flow path of the hydraulic oil between each of the secondary channels and the communication channel, the other end of the adjusting rod is extended to the exterior of the oil path separator seat, the adjusting rod is linearly displaceable in the oil path separator seat, the adjusting rod has an adjusting portion in a shape of a cone and formed at an end of the flow path of the hydraulic oil, a knob is installed at the adjusting rod exposed from the oil path separator seat for driving the adjusting rod to rotate synchronously, while driving the adjusting rod to displace linearly in the oil path separator seat, an amount and flow rate of the flow path of the hydraulic oil flowing between each of the secondary channels and the communication channel is adjusted by a change of positions of the adjusting portion of the adjusting rod.

16. The oil path separation structure of a shock absorber according to claim 2, wherein the adjustment module has a second adjusting hole which is a penetrating hole formed at the oil path separator seat for providing a position of installing a second adjustment module, the second adjustment module has an adjusting rod which passes through the second adjusting hole and has an end extended into the primary oil chamber and is coupled to an abutting member, the second adjustment module has a floating component and an adjustment module installed in the primary oil chamber, the adjustment module is provided for circulating a hydraulic oil and has a positioning tube to sequentially pass and install the adjustment module, the floating component and the abutting member so as to install and position the adjustment module to the oil path separator seat, the floating component in the primary oil chamber is situated in a linearly moving status, the adjusting rod and the abutting member synchronously and linearly move with each other to abut the floating component for a synchronous displacement, so as to adjust a distance between the floating component and the adjustment module, and to adjust a amount and flow rate of the hydraulic oil in the primary oil chamber that passes through the adjustment module.

17. The oil path separation structure of a shock absorber according to claim 16, wherein the adjustment module comprises an adjusting base which has a plurality of penetrating holes formed therein for circulating the hydraulic oil, a regulating spring member is installed onto the adjusting base to open or close each of the penetrating holes, and to adjust a distance between the resgulating spring member and the penetrating holes according to the pressure of the hydraulic oil, an abutting ring is in a shape of a circular base and installed to outside the positioning tube, the abutting ring has an end abutted and positioned at the oil path separator seat, and the other side is abutted and coupled to a central position of the regulating spring member.

18. The oil path separation structure of a shock absorber according to claim 16, wherein the floating component comprises a first floating member and a second floating member coupled to each other, the first floating member abuts against the abutting member, the second floating member is installed to outside the first floating member and has a plurality of circulating portions for circulating the hydraulic oil, a reed is installed between the first and second floating members for providing a compressible elastic space between the first and second floating members.

19. The oil path separation structure of a shock absorber according to claim 13, wherein the oil path separation module comprises a mounting seat which is installed at the top of the oil path separator seat for providing a position for installing each of the ON/OFF switch module and the first and second adjustment modules therein, each of the first and second adjustment modules has a speed adjustment module installed in the mounting seat and abuts against the adjust ord along the radial direction of the adjusting rod, the speed adjustment module has at least one sectioned portion in a planar shape and disposed around the adjusting rod, and the speed adjustment module comprises at least one steel ball and an elastic member coupled to each other and installed in the mounting seat, the steel ball is effectively coupled and abutted against the sectioned portion.
